# EUROPEAN PATENT SPECIFICATION

(11) **EP 4 579 690 B1**
(45) Date of publication and mention of the grant of the patent: **17.06.2026**
(21) Application number: 24220173.9
(22) Date of filing: 16.12.2024
(51) Int. Cl.: H01C 1/01, H01C 1/14, H01C 7/12, H01C 7/10, H01R 13/66, H01R 9/24, H01R 9/26, H01T 4/06, H01T 1/12, H01T 1/14

(54) **SURGE PROTECTIVE DEVICE AND CORRESPONDING MODULE**
ÜBERSPANNUNGSSCHUTZVORRICHTUNG UND ENTSPRECHENDES MODUL
DISPOSITIF DE PROTECTION CONTRE LES SURTENSIONS ET MODULE CORRESPONDANT

(30) Priority: 28.12.2023 CN 202311839588
(43) Date of publication of application: 02.07.2025
(73) Proprietor: DEHN SE, 92318 Neumarkt i.d. OPf. (DE)
(72) Inventor: XU, Niansheng, Shanghai 201109 (CN); LI, Hongjun, Shanghai 201109 (CN); LICINA, Alexandre, Shanghai 201108 (CN)
(74) Representative: Keller Schneider Patentanwaltsgesellschaft mbH

(56) References cited:
- EP-B1- 1 897 192
- EP-B1- 2 561 519
- CN-B- 102 237 162
- CZ-B6- 300 555
- DE-U1- 202015 101 950
- US-A- 5 724 221
- US-A1- 2004 246 644
- US-A1- 2013 010 395

## Description

### FIELD OF THE INVENTION

The present invention relates to a surge protective device (SPD) and to a corresponding module.

### BACKGROUND OF THE INVENTION

According to the process requirements of the voltage-limiting element - zinc oxide varistor (MOV) of a surge protective device, in order to meet the lightning and overvoltage protection objectives of high-voltage electrical systems under the same discharge capacity, it is necessary to increase the thickness of the core discharging element - voltage-limiting element MOV within the SPD. In order to meet the high voltage electrical system lightning and overvoltage protection objectives, the core discharging element within the SPD - the voltage limiting element - needs to increase the thickness of the MOV in order to achieve the adaptability of high-voltage equivalence requirements. In order to accommodate a greater thickness of the MOV, product designers need to correspondingly increase the size of the SPD, in order to achieve the appropriate protection function.

However, in practice, the SPD installation space is not unlimited expansion, often subject to the constraints of the miniaturisation of the size of the device, there is no extra space for expansion, especially in the horizontal direction, due to the installation of other products to be used, the space is greatly restricted. For this reason, how to improve the SPD's operating voltage index under the existing installation space conditions, is important.

In addition, in order to avoid abnormal operating conditions on the voltage-limiting surge protector (SPD) caused by low impedance or further short-circuit failure risk, such as overvoltage generated by faults in the system, or discharge of high surge energy, etc., space often need to be added to the SPD branch of the backup overcurrent protection, which in addition to the pressure on the installation of space, the appropriate selection problems, and the complexity of the wiring and installation issues.

Product designers need to consider how the backup overcurrent protection function is integrated into the SPD, reducing the use of lightning protection products selection requirements and reducing the SPD product installation tasks, as well as to achieve better protection performance at the same time, to improve user-friendliness, but also for the customer to bring lower implementation costs of lightning protection system construction.

CN 101485056 A discloses a base part for electrically and mechanically receiving at least one surge arrester insertable into the base part, wherein the base part comprises a U-shaped housing with a bottom or base unit in which a switching device for the display or remote indication of error conditions is arranged, wherein the housing has at least one cutout section receiving at least one spring-preloaded push-pin which is operatively connected to the switching device, wherein the push-pin is in mechanical contact with the surge arrester or with a trigger element provided in the arrester when the surge arrester is inserted.

The spring-preloaded push-pin is movably guided in a gate of the bottom or base unit, wherein a lower extension, which is oriented perpendicular to the direction of motion of the push-pin, has a sloping surface that corresponds with a sloping surface of a slide which is arranged in the bottom or base unit so as to be displaceable perpendicular to the direction of motion of the push-pin for transforming a motion of the push-pin into a displacing motion extending substantially perpendicular thereto, so that the slide can be transferred from a first position into a second position for actuating the switching device. The slide is preloaded by a spring element in such a manner that the sloping surfaces are non-positively engaged with each other.

DE 10 2012 024 352 B4 discloses surge protective device with a base part that can be fastened on a mounting rail and with two plug parts plugged onto the base part, the base part having a housing, the longitudinal extent of which is perpendicular to the longitudinal extent of a mounting rail. The opposite end faces of the housing each have at least one connection terminal for at least one conductor. In the base part two slots are arranged one behind the other in the longitudinal extent of the housing. The two slots each have at least two plug contacts whereby each of which has at least two plug contacts of the slots arranged one behind the other in the longitudinal direction of the housing which are not electrically connected to one another when no plug part is plugged in that the two plugged-on plug parts are electrically connected in series with one another. The plug parts each have at least two mating contacts corresponding to the plug-in contacts and at least one arrester is arranged in at least one plug part.

US 2004/246644 A1 discloses a surge protector assembly for use with a 66-M-type terminal connector block having a plurality of parallel rows of opposed terminals which are laterally spaced apart from each other. The surge protector assembly includes a housing module formed of co-mating front and back halves. A miniature printed circuit board is disposed within the housing module. Surge protector devices, a protector-operational status indicator circuitry, and a ground-connected status indicator circuitry are disposed on the miniature printed circuit board. A plurality of tip/ring terminal contacts are disposed within a lower portion of the housing module for mating with corresponding ones of the opposed terminals of the 66-M-type terminal connector block.

CZ 300555 B6 discloses a device for overvoltage protection containing between a pair of connection points a series-connected pair of varistors wherein each varistor comprises a pair of outlets . The varistors are disconnectable from a protected electrical circuit through the mediation of a thermal activation. A lightning arrester is connected between the pair of the connection points within a portion of an electric circuit between the pair of varistors and a connection point of grounding. The first outlet of the first varistor and the second outlet of the second varistor adjacent thereto are connected through low-fusing soldered connection with a disconnecting body by means of which they are interconnected, wherein said disconnecting body is coupled by means of a heat-resisting connection with a draw-away means. Said disconnecting body is further connected by means of a heat-resisting electrically conducting connection with one outlet of the lightning arrester wherein said heat-resisting electrically conducting connection enables draw-away movement of said disconnecting body.

US 5,724,221 A discloses a varistor-based voltage suppression circuit coupled to a power distribution system having at least one power line and at least one neutral line. A varistor is coupled directly to the power and neutral lines of the distribution circuit so that the electric current travels across at least one planar surface of the varistor, thus eliminating one or more leads from the distribution circuit to the varistor circuit. The suppression circuit may be a single varistor or a number of varistors in parallel with a number of lines in the distribution circuit.

US 2013/010395 A1 discloses an overvoltage protection device for protecting electrical low-voltage installations, having a lower device part and at least one upper device part, wherein the lower device part has input and output terminals for the electrical conductors to be connected and contact elements connected to the input and output terminals. The upper device part has at least one overvoltage protection element. An intermediate device part is additionally provided which can be fitted onto the lower device part and onto which the upper device part can be fitted. The intermediate device part has mating contact elements corresponding to the contact elements of the lower device part and also has contact elements connected to the mating contact elements. The intermediate part has at least one longitudinal element connected between two mating contact elements, and the upper device part has mating contact elements corresponding to the contact elements of the intermediate device part.

DE 20 2015 101950 U1 discloses a base for an overvoltage protection apparatus for protecting a load connected to a device against an overvoltage. The base has electrical connection contacts which are provided for connecting a network line of the network to the base, wherein the base has a receptacle for an arrester which is provided for discharging an overcurrent flowing across a network line of the network, wherein the base has at least two or more of the receptacles and a branch, wherein the branch is arranged between the receptacles and connects the receptacles to one another at a common star point, and wherein at least one of the or several of the electrical connection contacts is or are arranged in the branch.

### SUMMARY OF THE INVENTION

The invention is defined by the independent claims. The dependent claims define advantageous embodiments.

The surge protective device according to a first aspect of the present invention comprises a base part which is arranged to be fixed on a mounting rail, wherein the base part includes at least a first elongated plug-in section including at least a first to fourth mating contacts. An elongated first module is arranged in the first plug-in section and includes a first and a second protective circuit component adjacently arranged in longitudinal direction and fixedly mechanically connected to each other. The first module includes at least a first to fourth contact pin inserted in the first to fourth mating contacts, wherein the first and second contact pin are electrically connected to the first protective circuit component and the third and fourth contact pin are electrically connected to the second protective circuit component. The base part includes first wiring means for electrically connecting at least two mating contacts of the first plug-in section.

According to the first aspect of the invention the longitudinal dimension space utilization is more flexible, because a wiring is provided in the interior of the base part which allows electrically connecting at least two mating contacts with each other. Based on this, the present invention proposes an SPD that integrates an at least one further protective circuit component into one plug-in section, enabling e.g. that the SPD is realized through a series and/or parallel connection of the protective circuit components. In addition, multiple protective circuit components can be used for different combinations of SPDs to improve the ability to achieve more current flow and/or higher operating voltage. The base part of this invention can easily enable remote monitoring of product status through an integrated remote signaling structure, while implementing a combination of more modules.

According to a preferred embodiment the first wiring means is arranged for electrically connecting the second and third mating contact so that a series connection of the first and second protective circuit component is formed in the plugged-in state.

According to a further preferred embodiment the first wiring means includes a first wiring part for electrically connecting the first and third mating contact and a second wiring part for electrically connecting the second and fourth mating contact, the first and second wiring part being electrically isolated from each other, so that a parallel connection of the first and second protective circuit component is formed in the plugged-in state.

According to a further preferred embodiment the base part includes a second elongated plug-in section, wherein the first and second plug-in section are located in parallel and have the same longitudinal extension, and wherein the second plug-in section includes a fifth to eight mating contact.

According to a further preferred embodiment a second elongated module is arranged in the second plug-in section which includes at least a third protective circuit component, wherein the second module includes at least a fifth and sixth contact pin inserted in corresponding mating contacts in the base part, and wherein the base part includes second wiring means for electrically connecting at least one mating contact of the first plug-in section and at least one mating contact of the second plug-in section. Thus, adjacently arranged plug-in sections may be wired, as necessary for the electric function of the protective circuit components.

According to a further preferred embodiment the first and the second protective circuit component include a first overvoltage discharge component or a first fuse and a second overvoltage discharge component or a second fuse. Further or different protective circuit components can be included.

According to a further preferred embodiment the third protective circuit component includes an overcurrent protection component, and wherein the fifth and sixth contact pin are inserted in corresponding mating contacts in the base part.

According to a further preferred embodiment the overcurrent protection component includes a fuse and the second wiring means electrically connects the fourth and eighth mating contact.

According to a further preferred embodiment a second elongated module is arranged in the second plug-in section, wherein the second module includes a third and fourth protective circuit component in form of a third and a fourth overvoltage discharge component which adjacently arranged in longitudinal direction and mechanically connected to each other, the second module including a fifth to eighth contact pin inserted in fifth to eighth mating contacts in the base part, wherein the fifth and sixth contact pin are electrically connected to the third overvoltage discharge component and the seventh and eighth contact pin are electrically connected to the fourth overvoltage discharge component; and wherein first wiring means is arranged for electrically connecting the sixth and seventh mating contact so that a series connection of the third and fourth overvoltage discharge component is formed in the plugged-in state.

According to a further preferred embodiment the base part includes second wiring means for electrically connecting at least one mating contact of the first plug-in section and at least one mating contact of the second plug-in section.

According to a further preferred embodiment the first and the second protective circuit component are fixedly arranged on a first carrier part in a first common housing of the first module.

According to a further preferred embodiment the third and the fourth overvoltage discharge component are fixedly arranged on a second carrier part in a second common housing of the second module.

According to a further preferred embodiment the first module includes a first sub-module having a first submodule housing and a second sub-module having a second sub-module housing, wherein the first protective circuit component is arranged in the first submodule housing and the second protective circuit component is arranged in the second submodule housing, and wherein the first and second sub-module housing are fixedly mechanically connected to each other.

According to a further preferred embodiment the first module includes a mechanical coupling member arranged between the first and second sub-module housing which fixedly mechanically couples the first and second sub-module housing.

According to a further preferred embodiment the mechanical coupling member includes a first side face and a second side face, wherein the first submodule housing is glued to the first side face by first glueing means and the second sub-module housing is glued to the second side face by second glueing means.

According to a further preferred embodiment the first and second glueing means include a glueing tape. Thus, a stable connection between two sub-modules may be achieved.

According to a further preferred embodiment the second module includes a third sub-module having a third submodule housing and a fourth sub-module having a second sub-module housing, wherein the third overvoltage discharge component is arranged in the third submodule housing and the fourth overvoltage discharge component is arranged in the fourth submodule housing, and wherein the third and fourth sub-module housings are fixedly mechanically connected to each other.

According to a further preferred embodiment the first to fourth mating contacts and the fifth to eight mating contact of the base part are arranged in parallel pairs in the longitudinal direction of the first and second plug-in section.

According to a further preferred embodiment the base part includes a monitoring contact, wherein the first plug-in section includes a first and second push-button and the second plug-in section includes a third and fourth push-button, and wherein the first to fourth push-button connected to the monitoring contact for monitoring failure conditions of the first module and the second module.

According to a further preferred embodiment the first push-button is in mechanical contact with a first thermal tripping means of the first protective circuit component and the second push-button is in mechanical contact with a second thermal tripping means of the second protective circuit component in the plugged-in state.

According to a further preferred embodiment the third push-button or the fourth push-button is in mechanical contact with a third and/or fourth thermal tripping means of the third and/or fourth protective circuit component.

According to a further preferred embodiment the first module includes a first status indicator of the first protective circuit component and a second status indicator of the second protective circuit component.

According to a further preferred embodiment the second module includes a third status indicator of the third protective circuit component.

According to a further preferred embodiment the first wiring means and/or second wiring means is arranged removable from an outside of the base part.

The surge protective device according to a second aspect of the present invention comprises a base part which is arranged to be fixed on a mounting rail, wherein the base part includes at least a first elongated plug-in section including at least a first and second mating contact and a second elongated plug-in section including at least a third and fourth mating contact, wherein the first and second plug-in section are located in parallel and have the same longitudinal extension. An elongated first module arranged in the first plug-in section and including a first protective circuit component and a second elongated module arranged in the second plug-in section which includes at least a second protective circuit component, wherein the first module includes a first and second contact pin inserted in the first and second mating contact and wherein the first and second contact pin are electrically connected to the first protective circuit component. The second module includes a third and fourth contact pin inserted in the third and fourth mating contact and wherein the third and fourth contact pin are electrically connected to the second protective circuit component, wherein the base part includes wiring means for electrically connecting at least one mating contact of the first plug-in section and at least one mating contact of the second plug-in section.

According to the second aspect of the invention the lateral dimension space utilization is more flexible, because a wiring is provided in the interior of the base part which allows electrically connecting at least two mating contacts of two different adjacent plug-in sections with each other.

According to a further preferred embodiment the wiring means is arranged to electrically connect the second mating contact of the first plug-in section and the fourth mating contact of the second plug-in section such that the first and second protective circuit component are electrically connected in series.

According to a further preferred embodiment the wiring means is arranged removable from an outside of the base part.

The module for a surge protective device according to a third aspect of the present invention comprises a first and a second protective circuit component adjacently arranged in longitudinal direction and fixedly mechanically connected to each other, and a first to fourth contact pin, wherein the first and second contact pin are electrically connected to the first protective circuit component and the third and fourth contact pin are electrically connected to the second protective circuit component.

According to the third aspect of the invention, two protective circuit component may be provided which are adjacently arranged in longitudinal direction.

According to a further preferred embodiment the first and the second protective component are fixedly arranged on a first carrier part in a first common housing of the module.

According to a further preferred embodiment the module includes a first sub-module having a first submodule housing and a second sub-module having a second sub-module housing, wherein the first protective circuit component is arranged in the first submodule housing and the second protective circuit component is arranged in the second submodule housing, and wherein the first and second sub-module housing are fixedly mechanically connected to each other.

According to a further preferred embodiment the module includes a mechanical coupling member arranged between the first and second sub-module housing which fixedly mechanically couples the first and second sub-module housing.

According to a further preferred embodiment the mechanical coupling member includes a first side face and a second side face, wherein the first submodule housing is glued to the first side face by first glueing means and the second sub-module housing is glued to the second side face by second glueing means.

According to a further preferred embodiment the first and second glueing means include a glueing tape.

According to a further preferred embodiment the first and the second protective circuit component include a first overvoltage discharge component or a first fuse and a second overvoltage discharge component or second fuse.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other.

In the Figures:
- Fig. 1: shows a perspective view of a surge protective device according to a first embodiment of the present invention;
- Fig. 2a): shows a perspective view of the base part of the surge protective device according to the first embodiment of the present invention;
- Fig. 2b): shows a perspective view of the base part of the surge protective device according to the first embodiment of the present invention with removed top plate;
- Fig. 3a): shows a perspective view of the first module of the surge protective device according to the first embodiment of the present invention;
- Fig. 3b): shows a perspective view of the first module of the surge protective device according to the first embodiment of the present invention with removed cover;
- Fig. 3c): shows a another perspective view of the first module of the surge protective device according to the first embodiment of the present invention with removed cover;
- Fig. 4a): shows a perspective view of the second module of the surge protective device according to the first embodiment of the present invention;
- Fig. 4b): shows a perspective view of the second module of the surge protective device according to the first embodiment of the present invention with removed cover;
- Fig. 5: shows a circuit diagram of the surge protective device according to the first embodiment of the present invention;
- Fig. 6a): shows a explosive perspective view of the first module of the surge protective device according to the second embodiment of the present invention;
- Fig. 6b): shows a perspective view of the first module of the surge protective device according to the second embodiment of the present invention;
- Fig. 7: shows a perspective view of a surge protective device according to a third embodiment of the present invention;
- Fig. 8: shows a circuit diagram of the surge protective device according to the third embodiment of the present invention;
- Fig. 9: shows a circuit diagram of the surge protective device according to a fourth embodiment of the present invention;
- Fig. 10: shows a perspective explosive view of the base part of the surge protective device according to a fifth embodiment of the present invention; and
- Fig. 11a),b): show views view of the base part of the surge protective device according to a sixth embodiment of the present invention, namely Fig. 11a) e perspective side view and Fig. 11b) a perspective top view.

In the figures, like reference numerals denote like or functionally like components, unless indicated otherwise.

### DETAILED DESCRIPTION OF THE INVENTION

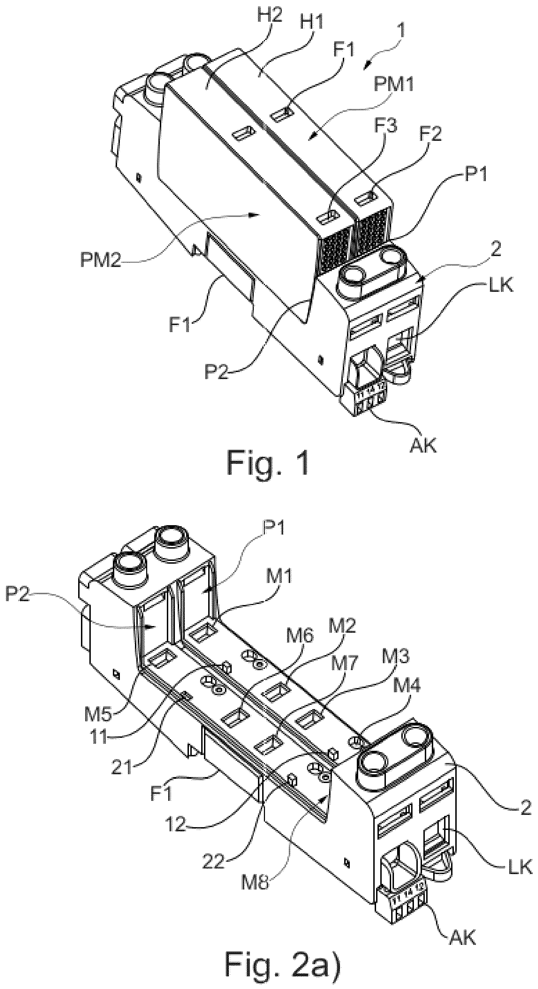

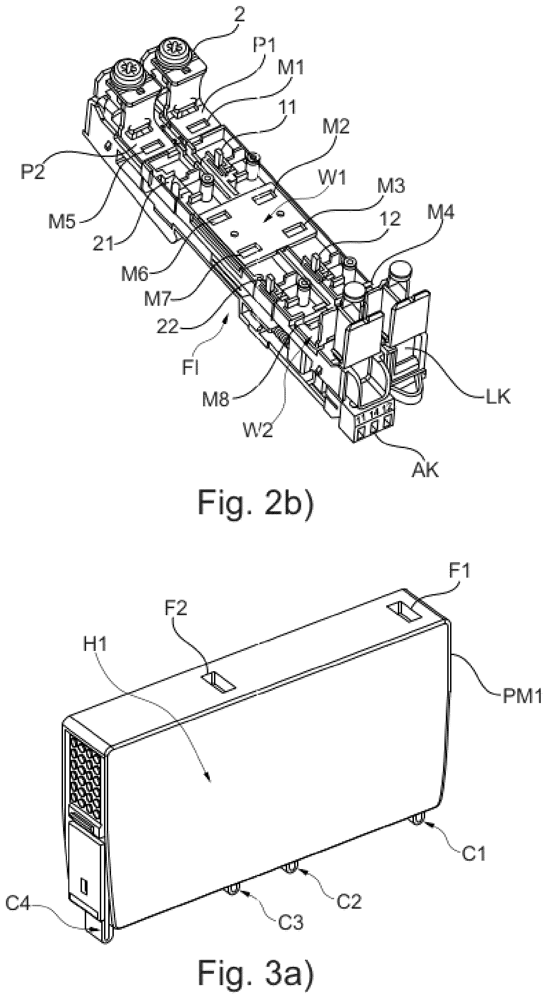

Fig. 1 shows a perspective view of a surge protective device 1 according to a first embodiment of the present invention, Fig. 2a) shows a perspective view of the base part of the surge protective device according to the first embodiment of the present invention, and Fig. 2b) shows a perspective view of the base part of the surge protective device according to the first embodiment of the present invention with removed top plate.

As shown in Fig. 1 the surge protective device 1 comprises a base part 2 which is arranged to be fixed on a mounting rail via a fixing recess FI on the back side of the base part 2.

The base part 2 includes a first and a second u-shaped plug-in section P1, P2 which are located in parallel and which have the same longitudinal, vertical and horizontal extension. The first plug-in section P1 including a first to fourth mating contacts M1-M4 and the second plug-in section P2 includes a fifth to eight mating contact M5-M8 (see Fig. 2a), b)).

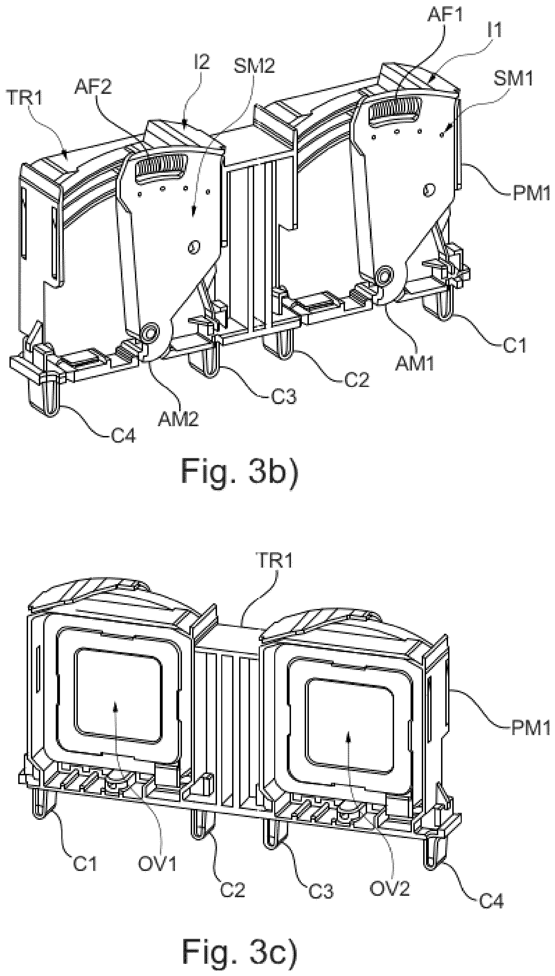

A first module PM1 is arranged in the first plug-in section P1 and including a first and a second overvoltage discharge component OV1, OV2 adjacently arranged in longitudinal direction of the first plug-in section P1 and mechanically connected to each other (cmp. Fig. 3c)). The first and a second overvoltage discharge component OV1, OV1 are fixed in a first common housing H1 which includes a first and second indicator window F1, F2 to be explained below in detail.

The first module PM1 includes a first to fourth contact pin C1-C4 inserted in the first to fourth mating contacts M1-M4, wherein the first and second pin C1, C2 are electrically connected to the first overvoltage discharge component OV1 and the third and fourth pin C3, C4 are electrically connected to the second overvoltage discharge component OV2 (cmp. Fig. 3c)).

As shown in Fig. 2b) the base part 2 in its interior includes first wiring means W1, e.g. a conductor plate, for electrically connecting at least the second and third mating contact M2, M3 so that a series connection of the first and second overvoltage discharge component OV1, OV2 is formed in the plugged-in state. Here, the first wiring means W1 is a rectangular conductor plate.

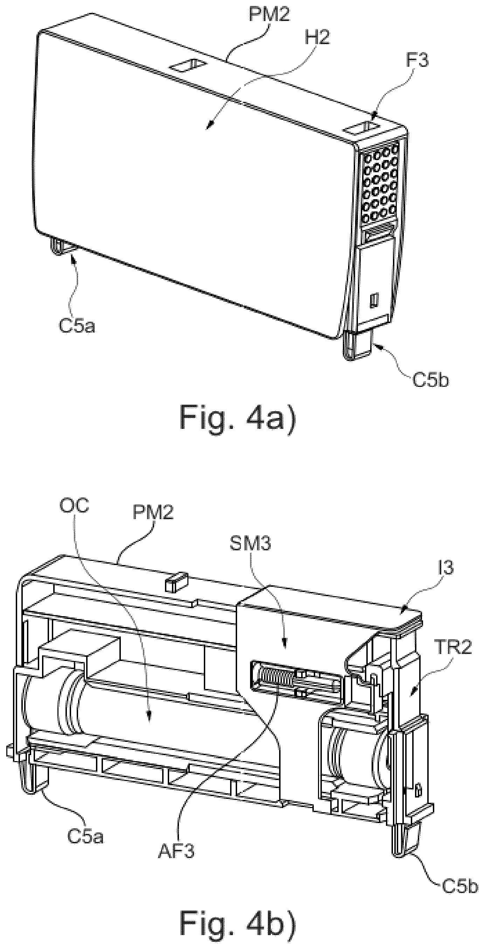

A second module PM2 is arranged in the second plug-in section P2 and includes at least one protective circuit component OC which in this embodiment is an overcurrent protection component OC in form of a fuse. The second module PM2 includes a fifth and sixth contact pin C5a, C5b inserted in corresponding mating contacts M5, M8 in the base part 2 (cmp. Fig. 4a). The overcurrent protection component OC in form of the fuse is fixed in a second housing H2 which includes a third indicator window F3 be explained below in detail.

As shown in Fig. 2b) the base part 2 in its interior includes second wiring means W2, e.g. a conductor plate, for electrically connecting the fourth mating contact M4 of the first plug-in section P1 and the eighth mating contact M8 of the second plug-in section P2 for electrically connecting the first and second module PM1, PM2. Here, the second wiring means W2 is also a rectangular conductor plate.

The base part 2 further includes external wiring contacts LK a monitoring contact AK, wherein the first plug-in section P1 includes a first and second push-button 11, 12 and the second plug-in section P2 includes a third an fourth push-button 21, 22.

The first to fourth push-button 11, 12, 21, 22 are connected to the monitoring contact AK for monitoring failure conditions of the first module PM1 and the second module PM2 in usual matter, e.g. as known from CN 101485056 A.

Fig. 3a) shows a perspective view of the first module of the surge protective device according to the first embodiment of the present invention, Fig. 3b) shows a perspective view of the first module of the surge protective device according to the first embodiment of the present invention with removed cover, and Fig. 3c) shows a another perspective view of the first module of the surge protective device according to the first embodiment of the present invention with removed cover.

With reference to Fig. 3a)-c) the first and the second overvoltage discharge component OV1, OV1 are fixedly arranged on a first carrier part TR1 in the first common housing H1 of the first module PM1.

The first push-button 11 is in mechanical contact with a first contact surface AM1 of a first thermal tripping means SM1 of the first overvoltage discharge component OV1 and the second push-button 12 is in mechanical contact with a second contact surface AM2 of a second thermal tripping means SM2 of the second overvoltage discharge component OV2 in the plugged-in state.

The first thermal tripping means SM1 is pre-biased by means of a first coil spring means AF1, and the second thermal tripping means SM2 is pre-biased by means of a second coil spring means AF2.

In case of a thermal failure event of the first overvoltage discharge component OV1 the first thermal tripping means SM1 is released and rotated by the spring force of first coil spring means AF1 such that a first status indicator I1 on the upper side of the first thermal tripping means SM1 which is externally visible via the first window F1 is deplaced.

In case of a thermal failure event of the second overvoltage discharge component OV2 the second thermal tripping means SM2 is released and rotated by the spring force of second coil spring means AF2 such that a second status indicator I1 on the upper side of the second thermal tripping means SM2 which is externally visible via the second window F2 is deplaced.

Fig. 4a) shows a perspective view of the second module of the surge protective device according to the first embodiment of the present invention, and Fig. 4b) shows a perspective view of the second module of the surge protective device according to the first embodiment of the present invention with removed cover.

With reference to Fig. 4a),b) the overcurrent protection component OC in form of the fuse is fixedly arranged on a second carrier part TR2 in the second housing H2 of the second module PM2.

The fourth push-button is in mechanical contact with a third contact surface of a third thermal tripping means SM3 of the overcurrent protection component OC
in the plugged-in state.

The third thermal tripping means SM3 is pre-biased by means of a third coil spring means AF3. In case of a thermal failure event of the overcurrent protection component OC the third thermal tripping means SM3 is released and rotated by the spring force of third coil spring means AF3 such that a third status indicator I3 on the upper side of the third thermal tripping means SM3 which is externally visible via the third window 3 is deplaced.

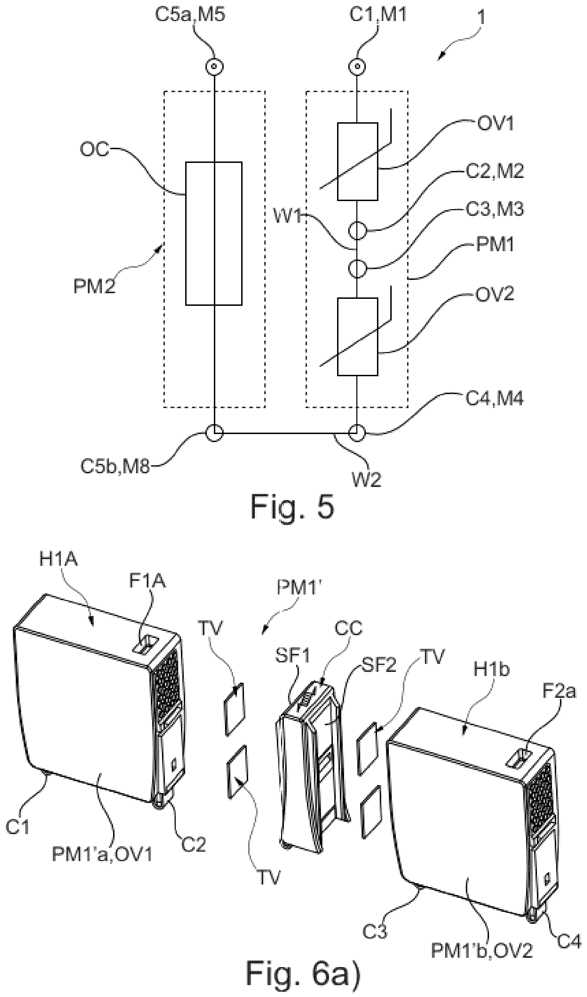

Fig. 5 shows a circuit diagram of the surge protective device according to the first embodiment of the present invention wherein the first and second wiring means W1, W2 described above are schematically drawn as lines and wherein the first and a second overvoltage discharge component OV1, OV2 and the overcurrent protection component OC are schematically drawn as electrical circuit symbols. The contacts C1-C4, and C5a, C5b as well as the mating contacts M1-M8 are also schematically drawn as circles.

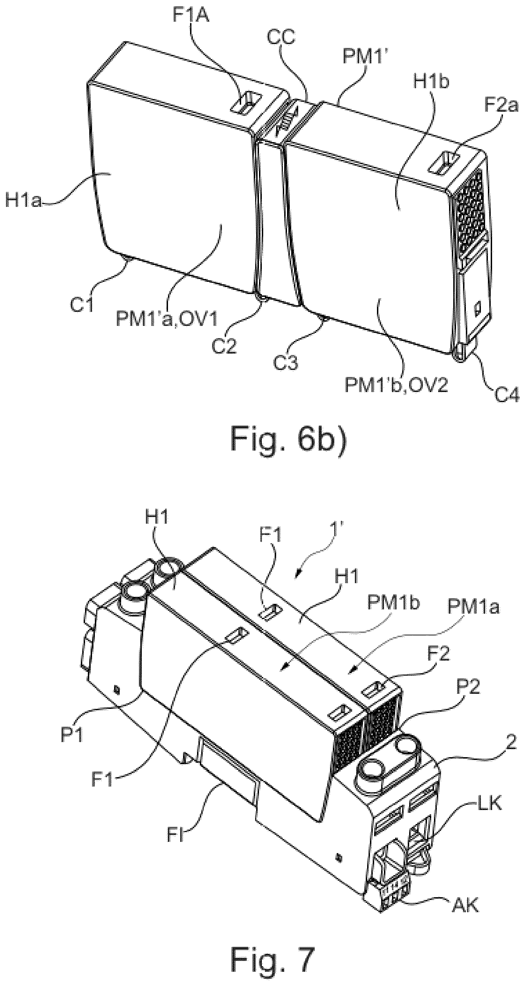

Fig. 6a) shows a explosive perspective view of the first module of the surge protective device according to the second embodiment of the present invention, and Fig. 6b) shows a perspective view of the first module of the surge protective device according to the second embodiment of the present invention.

The second embodiment differs from the first embodiment in the composition of the first module PM1'.

In particular, the first module PM1' of the second embodiment includes a first sub-module PM1'a having a first submodule housing H1a and a second sub-module PM1'b having a second sub-module housing H1b, wherein the first overvoltage discharge component OV1 is arranged in the first submodule housing H1a and the second overvoltage discharge component OV2 is arranged in the second submodule housing H1b.

The first and second sub-module housing H1a, H1b are fixedly mechanically connected to each other such that the first module PM1' includes a mechanical coupling member CC arranged between the first and second sub-module housing H1a, H1b which fixed mechanically couples the first and second sub-module housing H1a, H1b.

The mechanical coupling member CC has a columnar shape and includes a first side face SF1 and a second side face SF2, wherein the first submodule housing H1a is glued to the first side face SF1 by first glueing means TV and the second sub-module housing H1b is glued to the second side face SF2 by second glueing means TV. For example, the first and second glueing means TV include a glueing tape TV, here two glue tape strips TV on each of the first and second side faces SF1, SF2.

The first submodule housing H1a includes a first indicator window F1a, and the second submodule housing H1b includes a second indicator window F2a for the first and second status indicator 11, I2 of the first and second thermal tripping means SM1, SM2 explained above which are here separately provided in the first and second submodule housing H1a, H1b.

The dimensions of the assembled first module PM1' shown in Fig. 6b) are identical to the first module PM1 of the first embodiment.

The arrangement of the other components of the second embodiment is identical to the first embodiment.

Fig. 7 shows a perspective view of a surge protective device according to a third embodiment of the present invention.

The third embodiment differs from the first embodiment in the composition of the second module PM1b, whereas the first module PM1a is identical to the first module PM1.

In particular, here the second module PM1b is also identical to the first module PM1. Namely, the second module PM1b includes a third and a second overvoltage discharge component OV3, OV4 adjacently arranged in longitudinal direction of the second plug-in section P2 and mechanically connected to each other.

Thus, the second module PM2 includes a first to fourth contact pin C5-C8 inserted in the fifth to eighth mating contacts M5-M8 in the base part 2, wherein the fifth and sixth pin C5, C6 are electrically connected to the third overvoltage discharge component OV3 and the seventh and eighth pin C7, C8 are electrically connected to the fourth overvoltage discharge component OV4.

The first wiring means W1 explained above is arranged for electrically connecting the sixth and seventh mating contact M6, M7 so that a series connection of the third and fourth overvoltage discharge component OV3, OV4 is formed in the plugged-in state.

Moreover the first wiring means W1 explained above is arranged for electrically connecting second and third mating contact M2, M3 on one side and sixth and seventh mating contact M6, M7 on the other side. The second wiring means W2 connects the fourth and eighth mating contact M4, M8.

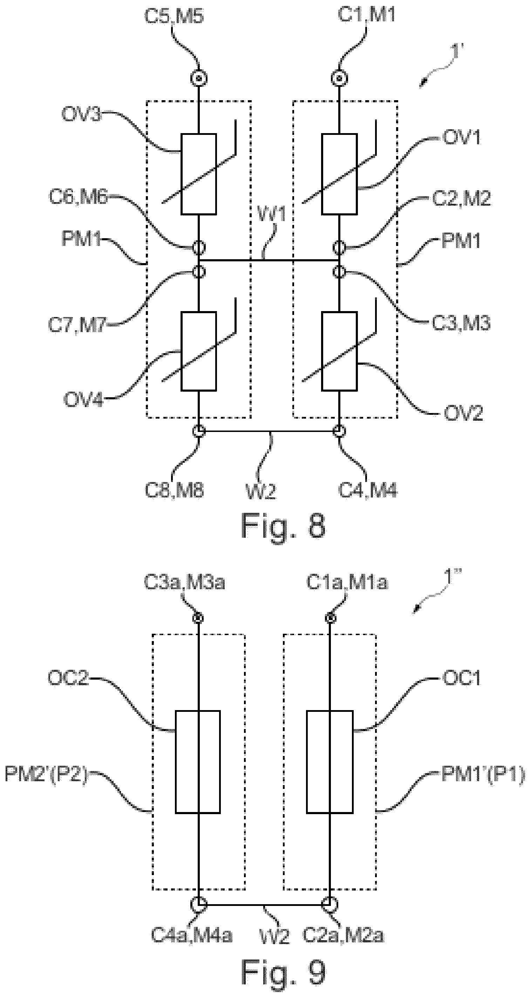

Fig. 8 shows a circuit diagram of the surge protective device according to the third embodiment of the present invention, wherein the first and second wiring means W1, W2 described above are schematically drawn as lines and wherein the first to fourth overvoltage discharge component OV1, OV2, OV3, OV4 are schematically drawn as electrical circuit symbols. The contacts C1-C8 as well as the mating contacts M1-M8 are also schematically drawn as circles.

Fig. 9 shows a circuit diagram of the surge protective device according to a fourth embodiment of the present invention.

According to the fourth embodiment the base part 2 of the surge protective device 1" includes a first elongated plug-in section P1 including a first and second mating contact M1a, M2a and a second elongated plug-in section P2 including a third and fourth mating contact M3a, M4a, wherein the first and second plug-in section P1, P2 are located in parallel and have the same longitudinal extension.

An elongated first module PM1' is arranged in the first plug-in section P1 and includes a first protective circuit component OC1 in form of a first fuse, and a second elongated module PM2' is arranged in the second plug-in section P2 and includes at least a second protective circuit component OC2 in form of a second fuse.

The first module PM1' includes a first and second contact pin C1a, C2a inserted in the first and second mating contact M1a, M2a, wherein the first and second contact pin C1a, C2a are electrically connected to the first protective circuit component OC1 in form of the first fuse.

The second module PM2' includes a third and fourth contact pin C3a, C4a inserted in the third and fourth mating contact M3a, M4a, wherein the third and fourth contact pin C3a, C4a are electrically connected to the second protective circuit component OC2 in form of the second fuse.

The base part 2 in its interior includes wiring means W2, e.g. a conductor plate, for electrically connecting the second mating contact M2a of the first plug-in section P1 and the fourth mating contact M4a of the second plug-in section P2 such that the first and second protective circuit component OC1, OC2 are electrically connected in series.

The further components of the fourth embodiment are identical to the respective components of the first to third embodiment.

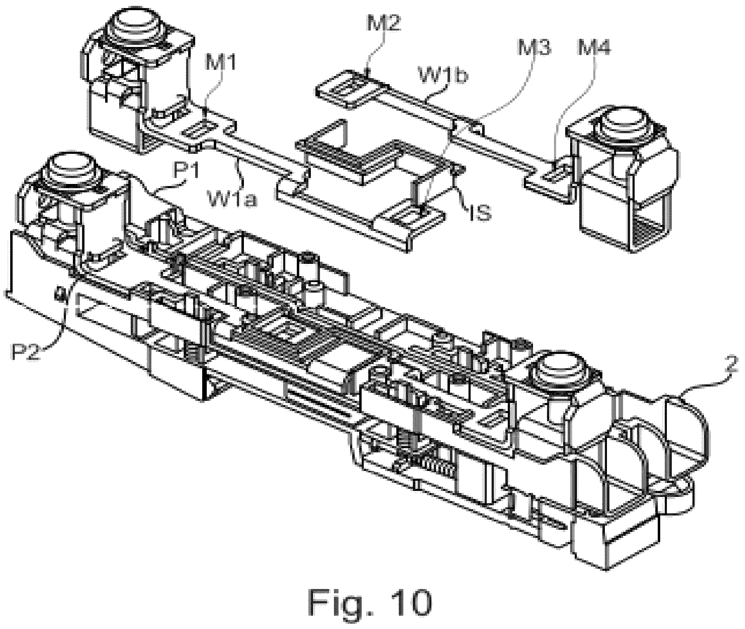

Fig. 10 shows a perspective explosive view of the base part of the surge protective device according to a fifth embodiment of the present invention.

In the fifth embodiment, the base part 2 in its interior includes first wiring means W1a, W1b composed of a first wiring part W1a for electrically connecting the first and third mating contact M1, M3 and a second wiring part W1b for electrically connecting the second and fourth mating contact M2, M4. The first and second wiring part W1a, W1b are elongated press-formed conductor plates, arranged to be inserted into corresponding pockets in the interior of the base part 2.

By means of an interposed insulator part IS, the inserted first and second wiring part W1a, W1b are electrically isolated from each other, so that a parallel connection of the first and second protective circuit component OV1, OV2 is formed in the plugged-in state.

The further components of the fifth embodiment are identical to the respective components of the first to fourth embodiment.

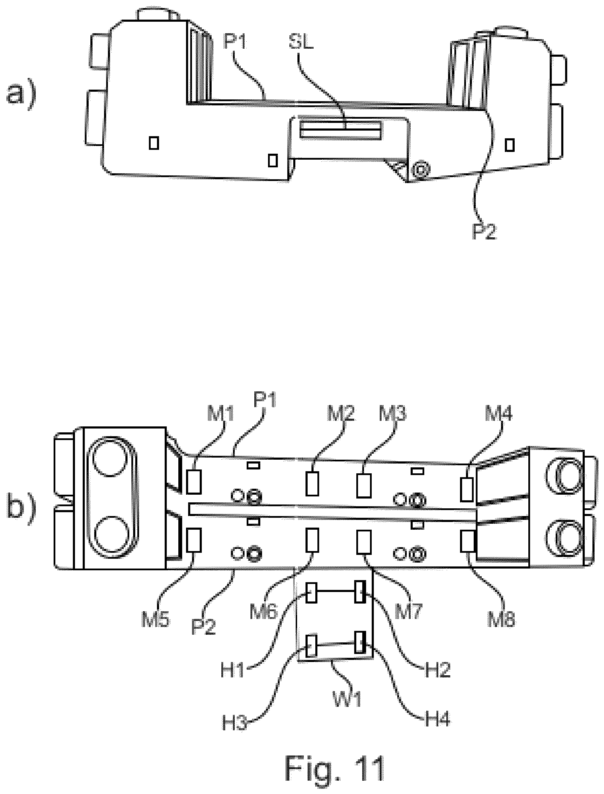

Fig. 11a),b) show views view of the base part of the surge protective device according to a sixth embodiment of the present invention, namely Fig. 11a) e perspective side view and Fig. 11b) a perspective top view.

The sixth embodiments differs from the first embodiment in that the first wiring means W1 is arranged removable from an outside of the base part 2. In particular, the base part 2 includes a laterally accessible slot SL which is arranged such that the first wiring means W1 in form of the rectangular conductor plate can be inserted to establish an electrical connection between the second, third, sixth and seventh mating contact M2, M3, M6, M7.

The first wiring means W1 in form of the rectangular conductor plate has four cut-outs H1 to H4 corresponding to the second, third, sixth and seventh mating contact M2, M3, M6, M7 which allow the first to fourth contact pin C1-C4 to inserted in the first to fourth mating contacts M1-M4. This makes the electrical arrangement changeable and mor flexible.

The further components of the sixth embodiment are identical to the respective components of the first embodiment.

Although specific embodiments have been illustrated and described herein, it will be appreciated by those of ordinary skill in the art that a variety of alternate and/or equivalent implementations may be substituted for the specific embodiments shown and described without departing from the scope of the present invention defined by the claims.

In particular, the invention has been described with reference to specific protective circuit components and specific intra and/or inter plug-in section wirings, it is not limited thereto, but can be used for arbitrary specific protective circuit components and specific intra and/or inter plug-in section wirings.

## Claims

1. A surge protective device (1; 1') comprising:
a base part (2) which is arranged to be fixed on a mounting rail;
wherein the base part (2) includes at least a first elongated plug-in section (P1) including at least a first to fourth mating contacts (M1-M4);
an elongated first module (PM1; PM1'; PM1a) arranged in the first plug-in section (P1) and including a first and a second protective circuit component (OV1, OV2) adjacently arranged in longitudinal direction and fixedly mechanically connected to each other;
wherein the first module (PM1; PM1', PM1a) includes at least a first to fourth contact pin (C1-C4) inserted in the first to fourth mating contacts (M1-M4), **characterized in that**, the first and second contact pin (C1, C2) are electrically connected to the first protective circuit component (OV1) and the third and fourth contact pin (C3, C4) are electrically connected to the second protective circuit component (OV2); and
wherein the base part (2) includes first wiring means (W1; W1a, W1b) for electrically connecting at least two mating contacts (M2, M3; M1, M3 and M2, M4) of the first plug-in section (P1).

2. The surge protective device (1; 1') of claim 1, wherein the first wiring means (W1) is arranged for electrically connecting the second and third mating contact (M2, M3) so that a series connection of the first and second protective circuit component (OV1, OV2) is formed in the plugged-in state.

3. The surge protective device (1; 1') of claim 1, wherein the first wiring means (W1a, W1b) includes a first wiring part (W1a) for electrically connecting the first and third mating contact (M1, M3) and a second wiring part (W1b) for electrically connecting the second and fourth mating contact (M2, M4), the first and second wiring part (W1a, W1b) being electrically isolated from each other, so that a parallel connection of the first and second protective circuit component (OV1, OV2) is formed in the plugged-in state.

4. The surge protective device (1; 1') of claim 1, 2 or 3, wherein the base part (2) includes a second elongated plug-in section (P2), wherein the first and second plug-in section (P1, P2) are located in parallel and have the same longitudinal extension, and wherein the second plug-in section (P2) includes a fifth to eight mating contact (M5-M8).

5. The surge protective device (1; 1') of claim 4, wherein a second elongated module (PM2; PM1b) is arranged in the second plug-in section (P2) which includes at least a third protective circuit component (OC; OV3, OV4);
wherein the second module (PM2; PM1b) includes at least a fifth and sixth contact pin (C5a, C5b; C5-C8) inserted in corresponding mating contacts (M5, M8; M5-M8) in the base part (2);
wherein the base part (2) includes second wiring means (W2) for electrically connecting at least one mating contact (M1, M2, M3, M4) of the first plug-in section (P1) and at least one mating contact (M5, M6, M7, M8) of the second plug-in section (P2);
wherein the first and the second protective circuit component (OV1, OV2) include a first overvoltage discharge component or a first fuse and a second overvoltage discharge component (OV2) or a second fuse; and
wherein the third protective circuit component (OC; OV3, OV4) includes an overcurrent protection component, and wherein the fifth and sixth contact pin (C5a, C5b) are inserted in corresponding mating contacts (M5, M8) in the base part (2).

6. The surge protective device (1; 1') of claim 5, wherein the overcurrent protection component (OC) includes a fuse and the second wiring means (W2) electrically connects the fourth and eighth mating contact (M4, M8).

7. The surge protective device (1; 1') of claim 4, wherein the base part (2) includes second wiring means (W2) for electrically connecting at least one mating contact (M1, M2, M3, M4) of the first plug-in section (P1) and at least one mating contact (M5, M6, M7, M8) of the second plug-in section (P2).

8. The surge protective device (1; 1') according to one of claim 1 to 7, wherein the first wiring means (W1; W1a, W1b) and/or second wiring means (W2) is arranged removable from an outside of the base part (2).

9. An elongated module (PM1; PM1'; PM1a) for a surge protective device (1; 1') comprising:
a first and a second protective circuit component (OV1, OV2) adjacently arranged in longitudinal direction and fixedly mechanically connected to each other; and
a first to fourth contact pin (C1-C4), **characterized in that**, the first and second contact pin (C1, C2) are electrically connected to the first protective circuit component (OV1) and the third and fourth contact pin (C3, C4) are electrically connected to the second protective circuit component (OV2).

10. The module (PM1; PM1'; PM1a) of claim 9, wherein the first and the second protective component (OV1, OV2) are fixedly arranged on a first carrier part (TR1) in a first common housing (H1) of the module (PM1).

11. The module (PM1; PM1'; PM1a) of claim 9, wherein the module (PM1') includes a first sub-module (PM1'a) having a first submodule housing (H1a) and a second sub-module (PM1'b) having a second sub-module housing (H1b), wherein the first protective circuit component (OV1) is arranged in the first submodule housing (H1a) and the second protective circuit component (OV2) is arranged in the second submodule housing (H1b), and wherein the first and second sub-module housing (H1a, H1b) are fixedly mechanically connected to each other.

12. The module (PM1; PM1'; PM1a) of claim 11, wherein the module (PM1') includes a mechanical coupling member (CC) arranged between the first and second sub-module housing (H1a, H1b) which fixedly mechanically couples the first and second sub-module housing (H1a, H1b).

13. The module (PM1; PM1'; PM1a) of claim 12, wherein the mechanical coupling member (CC) includes a first side face (SF1) and a second side face (SF2), wherein the first submodule housing (H1a) is glued to the first side face (SF1) by first glueing means (TV) and the second sub-module housing (H1b) is glued to the second side face (SF2) by second glueing means (TV).

14. The module (PM1; PM1'; PM1a) of claim 13, wherein the first and second glueing means (TV) include a glueing tape (TV).

15. The module (PM1; PM1'; PM1a) according to one of claims 9 to 13, wherein the first and the second protective circuit component (OV1, OV2) include a first overvoltage discharge component (OV1) or a first fuse and a second overvoltage discharge component (OV2) or a second fuse.

## Patentansprüche

1. Überspannungsschutzvorrichtung (1; 1') aufweisend:
ein Unterteil (2), welches zur Befestigung an einer Tragschiene angeordnet ist;
wobei das Unterteil (2) mindestens einen ersten länglichen Steckabschnitt (P1) mit mindestens einem ersten bis vierten Gegenkontakt (M1-M4) aufweist;
ein im ersten Steckabschnitt (P1) angeordnetes, längliches erstes Modul (PM1; PM1'; PM1a) mit einem ersten und einem zweiten in Längsrichtung benachbart angeordneten und mechanisch fest miteinander verbundenen Schutzschaltungsbauteil (OV1, OV2);
wobei das erste Modul (PM1; PM1', PM1a) mindestens einen in den ersten bis vierten Gegenkontakt (M1-M4) eingesetzten ersten bis vierten Kontaktstift (C1-C4) aufweist,
**dadurch gekennzeichnet, dass**
der erste und zweite Kontaktstift (C1, C2) mit dem ersten Schutzschaltungsbauteil (OV1) und der dritte und vierte Kontaktstift (C3, C4) mit dem zweiten Schutzschaltungsbauteil (OV2) elektrisch verbunden sind; und
wobei das Unterteil (2) ein erstes Verdrahtungsmittel (W1; W1a, W1b) zum elektrischen Verbinden von mindestens zwei Gegenkontakten (M2, M3; M1, M3 und M2, M4) des ersten Steckabschnitts (P1) aufweist.

2. Überspannungsschutzvorrichtung (1; 1') nach Anspruch 1, wobei das erste Verdrahtungsmittel (W1) so angeordnet ist, dass der zweite und der dritte Gegenkontakt (M2, M3) elektrisch miteinander verbunden sind, wodurch eine Reihenschaltung des ersten und zweiten Schutzschaltungsbauteils (OV1, OV2) im eingesteckten Zustand gebildet ist.

3. Überspannungsschutzvorrichtung (1; 1') nach Anspruch 1, wobei das erste Verdrahtungsmittel (W1a, W1b) ein erstes Verdrahtungselement (W1a) zum elektrischen Verbinden des ersten und dritten Gegenkontakts (M1, M3) und ein zweites Verdrahtungselement (W1b) zum elektrischen Verbinden des zweiten und vierten Gegenkontakts (M2, M4) aufweist, wobei das erste und zweite Verdrahtungselement (W1a, W1b) elektrisch voneinander isoliert sind, wodurch eine Parallelschaltung des ersten und zweiten Schutzschaltungsbauteils (OV1, OV2) im eingesteckten Zustand gebildet ist.

4. Überspannungsschutzvorrichtung (1; 1') nach Anspruch 1, 2 oder 3, wobei das Unterteil (2) einen zweiten länglichen Steckabschnitt (P2) aufweist, wobei der erste und zweite Steckabschnitt (P1, P2) parallel angeordnet sind und die gleiche Längserstreckung aufweisen, und wobei der zweite Steckabschnitt (P2) einen fünften bis achten Gegenkontakt (M5-M8) aufweist.

5. Überspannungsschutzvorrichtung (1; 1') nach Anspruch 4, wobei im zweiten Steckabschnitt (P2) ein zweites längliches Modul (PM2; PM1b) angeordnet ist, welches mindestens ein drittes Schutzschaltungsbauteil (OC; OV3, OV4) aufweist;
wobei das zweite Modul (PM2; PM1b) mindestens einen in entsprechende Gegenkontakte (M5, M8; M5-M8) im Unterteil (2) eingesetzten fünften und sechsten Kontaktstift (C5a, C5b; C5-C8) aufweist;
wobei das Unterteil (2) ein zweites Verdrahtungsmittel (W2) aufweist, welches mindestens einen Gegenkontakt (M1, M2, M3, M4) des ersten Steckabschnitts (P1) und mindestens einen Gegenkontakt (M5, M6, M7, M8) des zweiten Steckabschnitts (P2) elektrisch miteinander verbindet;
wobei das erste und zweite Schutzschaltungsbauteil (OV1, OV2) ein erstes Überspannungsentladungsbauteil oder eine erste Sicherung und ein zweites Überspannungsentladungsbauteil (OV2) oder eine zweite Sicherung aufweisen; und
wobei das dritte Schutzschaltungsbauteil (OC; OV3, OV4) ein Überstromschutzbauteil aufweist, und wobei der fünfte und sechste Kontaktstift (C5a, C5b) in entsprechende Gegenkontakte (M5, M8) im Unterteil (2) eingesetzt sind.

6. Überspannungsschutzvorrichtung (1; 1') nach Anspruch 5, wobei das Überstromschutzbauteil (OC) eine Sicherung aufweist und das zweite Verdrahtungsmittel (W2) den vierten und achten Gegenkontakt (M4, M8) elektrisch miteinander verbindet.

7. Überspannungsschutzvorrichtung (1; 1') nach Anspruch 4, wobei das Unterteil (2) ein zweites Verdrahtungsmittel (W2) aufweist, welches mindestens einen Gegenkontakt (M1, M2, M3, M4) des ersten Steckabschnitts (P1) und mindestens einen Gegenkontakt (M5, M6, M7, M8) des zweiten Steckabschnitts (P2) elektrisch miteinander verbindet.

8. Überspannungsschutzvorrichtung (1; 1') nach einem der Ansprüche 1 bis 7, wobei das erste Verdrahtungsmittel (W1; W1a, W1b) und/oder das zweite Verdrahtungsmittel (W2) von einer Außenseite des Unterteils (2) abnehmbar angeordnet ist.

9. Längliches Modul (PM1; PM1'; PM1a) für eine Überspannungsschutzvorrichtung (1; 1') aufweisend:
ein erstes und ein zweites in Längsrichtung benachbart angeordnetes und mechanisch fest miteinander verbundenes Schutzschaltungsbauteil (OV1, OV2); und
einen ersten bis vierten Kontaktstift (C1-C4),
**dadurch gekennzeichnet, dass**
der erste und zweite Kontaktstift (C1, C2) mit dem ersten Schutzschaltungsbauteil (OV1) und der dritte und vierte Kontaktstift (C3, C4) mit dem zweiten Schutzschaltungsbauteil (OV2) elektrisch verbunden sind.

10. Modul (PM1; PM1'; PM1a) nach Anspruch 9, wobei das erste und das zweite Schutzschaltungsbauteil (OV1, OV2) auf einem ersten Trägerteil (TR1) in einem ersten gemeinsamen Gehäuse (H1) des Moduls (PM1) fest angeordnet sind.

11. Modul (PM1; PM1'; PM1a) nach Anspruch 9, wobei das Modul (PM1') ein erstes Submodul (PM1'a) mit einem ersten Submodulgehäuse (H1a) und ein zweites Submodul (PM1'b) mit einem zweiten Submodulgehäuse (H1b) aufweist, wobei das erste Schutzschaltungsbauteil (OV1) im ersten Submodulgehäuse (H1a) und das zweite Schutzschaltungsbauteil (OV2) im zweiten Submodulgehäuse (H1b) angeordnet ist, und wobei das erste und zweite Submodulgehäuse (H1a, H1b) mechanisch fest miteinander verbunden sind.

12. Modul (PM1; PM1'; PM1a) nach Anspruch 11, wobei das Modul (PM1') ein zwischen dem ersten und zweiten Submodulgehäuse (H1a, H1b) angeordnetes mechanisches Kopplungsglied (CC) aufweist, welches das erste und zweite Submodulgehäuse (H1a, H1b) mechanisch fest koppelt.

13. Modul (PM1; PM1'; PM1a) nach Anspruch 12, wobei das mechanische Kopplungsglied (CC) eine erste Seitenfläche (SF1) und eine zweite Seitenfläche (SF2) aufweist, wobei das erste Submodulgehäuse (H1a) mittels eines ersten Klebemittels (TV) mit der ersten Seitenfläche (SF1) geklebt ist und das zweite Submodulgehäuse (H1b) mittels eines zweiten Klebemittels (TV) mit der zweiten Seitenfläche (SF2) geklebt ist.

14. Modul (PM1; PM1'; PM1a) nach Anspruch 13, wobei das erste und zweite Klebemittel (TV) ein Klebeband (TV) aufweisen.

15. Modul (PM1; PM1'; PM1a) nach einem der Ansprüche 9 bis 13, wobei das erste und zweite Schutzschaltungsbauteil (OV1, OV2) ein erstes Überspannungsentladungsbauteil (OV1) oder eine erste Sicherung und ein zweites Überspannungsentladungsbauteil (OV2) oder eine zweite Sicherung aufweisen.

## Revendications

1. Dispositif de protection contre les surtensions (1 ; 1') comprenant :
un socle (2) qui est configuré de manière à être fixé sur un rail de montage ;
dans lequel le socle (2) comprend au moins une première section d'enfichage allongée (P1) comprenant au moins un premier à un quatrième contact complémentaire (M1-M4) ;
un premier module allongé (PM1 ; PM1' ; PM1a) disposé dans la première section d'enfichage (P1) et comprenant un premier et un deuxième composant de circuit de protection (OV1, OV2) disposés de manière adjacente dans le sens longitudinal et reliés mécaniquement l'un à l'autre de manière fixe ;
dans lequel le premier module (PM1 ; PM1', PM1a) comprend au moins une première à une quatrième broche de contact (C1-C4) insérée dans les premier à quatrième contacts complémentaires (M1-M4),
**caractérisé en ce que**
la première et la deuxième broche de contact (C1, C2) sont reliées électriquement au premier composant de circuit de protection (OV1) et la troisième et la quatrième broche de contact (C3, C4) sont reliées électriquement au deuxième composant de circuit de protection (OV2) ; et
dans lequel le socle (2) comprend des premiers moyens de câblage (W1 ; W1a, W1b) visant à relier électriquement au moins deux contacts complémentaires (M2, M3 ; M1, M3 et M2, M4) de la première section d'enfichage (P1).

2. Dispositif de protection contre les surtensions (1 ; 1') selon la revendication 1, dans lequel les premiers moyens de câblage (W1) sont conçus pour relier électriquement le deuxième et le troisième contact complémentaire (M2, M3) de sorte qu'une connexion en série du premier et du deuxième composant de circuit de protection (OV1, OV2) est formée à l'état enfiché.

3. Dispositif de protection contre les surtensions (1 ; 1') selon la revendication 1, dans lequel les premiers moyens de câblage (W1a, W1b) comprennent une première partie de câblage (W1a) destinée à relier électriquement le premier et le troisième contact complémentaire (M1, M3) ainsi qu'une deuxième partie de câblage (W1b) destinée à relier électriquement le deuxième et le quatrième contact complémentaire (M2, M4), dans lequel la première et la deuxième partie de câblage (W1a, W1b) sont isolées électriquement l'une de l'autre, de sorte qu'une connexion parallèle du premier et du deuxième composant de circuit de protection (OV1, OV2) est formée à l'état enfiché.

4. Dispositif de protection contre les surtensions (1 ; 1') selon la revendication 1, 2 ou 3, dans lequel le socle (2) comprend une deuxième section d'enfichage allongée (P2), dans lequel la première et la deuxième section d'enfichage (P1, P2) sont situées en parallèle et présentent la même extension longitudinale, et dans lequel la deuxième section d'enfichage (P2) comprend un cinquième à un huitième contact complémentaire (M5-M8).

5. Dispositif de protection contre les surtensions (1 ; 1') selon la revendication 4, dans lequel un deuxième module allongé (PM2 ; PM1b) est disposé dans la deuxième section d'enfichage (P2) qui comprend au moins un troisième composant de circuit de protection (OC ; OV3, OV4) ;
dans lequel le deuxième module (PM2 ; PM1b) comprend au moins une cinquième et une sixième broche de contact (C5a, C5b ; C5-C8) insérées dans des contacts complémentaires correspondants (M5, M8 ; M5-M8) dans le socle (2) ;
dans lequel le socle (2) comprend un deuxième moyen de câblage (W2) destiné à relier électriquement au moins un contact complémentaire (M1, M2, M3, M4) de la première section d'enfichage (P1) et au moins un contact complémentaire (M5, M6, M7, M8) de la deuxième section d'enfichage (P2) ;
dans lequel le premier et le deuxième composant de circuit de protection (OV1, OV2) comprennent un premier composant de décharge de surtension ou un premier fusible et un deuxième composant de décharge de surtension (OV2) ou un deuxième fusible ; et
dans lequel le troisième composant de circuit de protection (OC ; OV3, OV4) comprend un composant de protection contre les surintensités, et dans lequel la cinquième et la sixième broche de contact (C5a, C5b) sont insérées dans des contacts complémentaires correspondants (M5, M8) dans le socle (2).

6. Dispositif de protection contre les surtensions (1 ; 1') selon la revendication 5, dans lequel le composant de protection contre les surintensités (OC) comprend un fusible et dans lequel le deuxième moyen de câblage (W2) relie électriquement le quatrième et le huitième contact complémentaire (M4, M8).

7. Dispositif de protection contre les surtensions (1 ; 1') selon la revendication 4, dans lequel le socle (2) comprend un deuxième moyen de câblage (W2) destiné à relier électriquement au moins un contact complémentaire (M1, M2, M3, M4) de la première section d'enfichage (P1) et au moins un contact complémentaire (M5, M6, M7, M8) de la deuxième section d'enfichage (P2).

8. Dispositif de protection contre les surtensions (1 ; 1') selon l'une des revendications 1 à 7, dans lequel le premier moyen de câblage (W1 ; W1a, W1b) et/ou le deuxième moyen de câblage (W2) sont disposés de manière amovible depuis l'extérieur du socle (2).

9. Module allongé (PM1 ; PM1' ; PM1a) pour un dispositif de protection contre les surtensions (1 ; 1') comprenant :
un premier et un deuxième composant de circuit de protection (OV1, OV2) disposés de manière adjacente dans le sens longitudinal et reliés mécaniquement l'un à l'autre de manière fixe ; et
une première à une quatrième broche de contact (C1-C4),
**caractérisé en ce que**
la première et la deuxième broche de contact (C1, C2) sont reliées électriquement au premier composant de circuit de protection (OV1) et la troisième et la quatrième broche de contact (C3, C4) sont reliées électriquement au deuxième composant de circuit de protection (OV2).

10. Module (PM1 ; PM1'; PM1a) selon la revendication 9, dans lequel le premier et le deuxième composant de protection (OV1, OV2) sont disposés de manière fixe sur une première partie de support (TR1) dans un premier boîtier commun (H1) du module (PM1).

11. Module (PM1 ; PM1' ; PM1a) selon la revendication 9, dans lequel le module (PM1') comprend un premier sous-module (PM1'a) comprenant un premier boîtier de sous-module (H1a) et un deuxième sous-module (PM1'b) comprenant un deuxième boîtier de sous-module (H1b), dans lequel le premier composant de circuit de protection (OV1) est disposé dans le premier boîtier de sous-module (H1a) et le deuxième composant de circuit de protection (OV2) est disposé dans le deuxième boîtier de sous-module (H1b), et dans lequel le premier et le deuxième boîtier de sous-module (H1a, H1b) sont reliés mécaniquement l'un à l'autre de manière fixe.

12. Module (PM1 ; PM1' ; PM1a) selon la revendication 11, dans lequel le module (PM1') comprend un élément de couplage mécanique (CC) disposé entre le premier et le deuxième boîtier de sous-module (H1a, H1b) qui couple mécaniquement le premier et le deuxième boîtier de sous-module (H1a, H1b) de manière fixe.

13. Module (PM1 ; PM1' ; PM1a) selon la revendication 12, dans lequel l'élément de couplage mécanique (CC) comprend une première face latérale (SF1) et une deuxième face latérale (SF2), dans lequel le premier boîtier de sous-module (H1a) est collé à la première face latérale (SF1) par un premier moyen de collage (TV) et le deuxième boîtier de sous-module (H1b) est collé à la deuxième face latérale (SF2) par un deuxième moyen de collage (TV).

14. Module (PM1 ; PM1' ; PM1a) selon la revendication 13, dans lequel le premier et le deuxième moyen de collage (TV) comprennent une bande adhésive (TV).

15. Module (PM1 ; PM1' ; PM1a) selon l'une des revendications 9 à 13, dans lequel le premier et le deuxième composant de circuit de protection (OV1, OV2) comprennent un premier composant de décharge de surtension (OV1) ou un premier fusible et un deuxième composant de décharge de surtension (OV2) ou un deuxième fusible.
